# EUROPEAN PATENT APPLICATION

(11) **EP 4 542 974 A1**
(43) Date of publication of application: **23.04.2025**
(21) Application number: 22947163.6
(22) Date of filing: 20.06.2022
(51) Int. Cl.: H04M 1/02, F16C 11/04, F16C 11/12, G06F 1/16

(54) **HINGE STRUCTURE AND ELECTRONIC DEVICE**

(71) Applicant: Beijing Xiaomi Mobile Software Co., Ltd., Beijing 100085 (CN)
(72) Inventor: LIU, Jianwei, Beijing 100085 (CN)
(74) Representative: Zimmermann, Tankred Klaus
(86) International application number: PCT/CN2022/099956
(87) International publication number: WO 2023/245382

(57) **Abstract**

The present disclosure relates to a hinge structure. The hinge structure comprises: a base frame component, the base frame component comprising a first supporting surface; a supporting component, the supporting component comprising a second supporting surface; a first rotating component, the first rotating component being rotatably connected to the base frame component; a second rotating component, the second rotating component being rotatably connected to the base frame component, and the second rotating component being slidably connected to the supporting component; and a linkage component, the linkage component being hinged to the supporting component.

## Description

### FIELD

The present disclosure relates to the field of terminal technologies, and in particular to a hinge structure and an electronic device.

### BACKGROUND

With the rapid development of the communication field, various electronic products are also developing rapidly. On the one hand, users want a touch screen of the electronic products with touch screens such as mobile phones and tablet computers to be as large as possible, and on the other hand, users want these electronic products to maintain the original portability. Therefore, electronic products with folding screens have become a new category.

Electronic products with folding screens generally use a foldable flexible screen as the display screen, and the flexible screen is arranged on a face of a hinge structure. When the hinge is closed, the screen is closed, and the length and width of the whole machine are reduced by increasing the folding thickness. When the hinge is opened, the screen is opened, and the electronic product obtains a larger display area. The two states may be switched freely to realize compatibility of the portability and the large screen. The hinge structure configured to drive the screen to fold determines the folding effect of the screen.

### SUMMARY

In order to overcome the problems existing in the related art, the present disclosure provides a hinge structure and an electronic device.

According to a first aspect of embodiments of the present disclosure, there is provided a hinge structure. The hinge structure includes: a base frame assembly including a first supporting face; a supporting assembly including a second supporting face; a first rotating assembly rotatably coupled to the base frame assembly; a second rotating assembly rotatably coupled to the base frame assembly, the second rotating assembly being slidably coupled to the supporting assembly; and a coupling rod assembly hinged to the supporting assembly, the first rotating assembly and the second rotating assembly.

In an embodiment, the coupling rod assembly includes: a first coupling rod having an end hinged to the supporting assembly; a second coupling rod having an end hinged to the second rotating assembly. The other end of the first coupling rod is hinged to the first rotating assembly and the other end of the second coupling rod; and the other end of the second coupling rod is hinged to the other end of the first coupling rod and the supporting assembly.

In an embodiment, the other end of the first coupling rod is coaxially hinged to the first rotating assembly and the other end of the second coupling rod, and the first coupling rod and the second coupling rod are arranged side by side between the first rotating assembly and the second rotating assembly.

In an embodiment, the supporting assembly includes: a supporting member hinged to the first rotating assembly, the supporting member being also hinged to the coupling rod assembly; and a fixed member slidably coupled to the second rotating assembly, the fixed member being also hinged to the coupling rod assembly. The supporting member is rotatably coupled to the fixed member.

In an embodiment, the supporting member includes: a first hinge part hinged to the coupling rod assembly and the first rotating assembly.

In an embodiment, the fixed member includes: a second hinge part hinged to the coupling rod assembly; and a first sliding groove slidably coupled to the second rotating assembly.

In an embodiment, the hinge structure further includes: a limiting member hinged to the supporting member. The limiting member is also slidably coupled to the fixed member.

In an embodiment, the fixed member is provided with a second sliding groove; the limiting member is provided with a fixed part, and the fixed part is slidably coupled to the second sliding groove. When the supporting assembly is in a folded state, the fixed part is abutted against a first end of the second sliding groove close to a side of the base frame assembly.

In an embodiment, an extension direction of the second sliding groove is parallel to a sliding direction of the second rotating assembly and the supporting assembly.

In an embodiment, the limiting member includes a third hinge part, a side of the supporting assembly facing away from the second supporting face is provided with a first mounting part, and the third hinge part of the limiting member is hinged to the first mounting part of the supporting assembly.

In an embodiment, the fixed member is provided with a first arc-shaped sliding groove, the supporting member is provided with a first sliding part, and the first sliding part is arranged in the first arc-shaped sliding groove. When the supporting assembly is in a folded state, the first sliding part is abutted against a bottom of the first arc-shaped sliding groove.

In an embodiment, the fixed member includes an abutment inclined face, and an opening of the first arc-shaped sliding groove is toward a side of the abutment inclined face. When the supporting assembly is in a folded state, the supporting member is abutted against the abutment inclined face, the second supporting face is obliquely arranged with the first supporting face, and an inclination direction of the second supporting face is identical to a folding direction of the supporting assembly.

In an embodiment, the base frame assembly includes: a base frame, the first supporting face being located on the base frame, the second rotating assembly being hinged to a side of the base frame facing away from the first supporting face; and a cover plate. One of the cover plate and the base frame is provided with an arc-shaped protrusion, the other of the cover plate and the base frame is provided with an arc-shaped groove, and the arc-shaped protrusion and the arc-shaped groove enclose a second arc-shaped sliding groove. The second arc-shaped sliding groove is located at a side facing away from the first supporting face, and the first rotating assembly is rotatably arranged in the second arc-shaped sliding.

In an embodiment, a side of the base frame facing away from the first supporting face is provided with a second mounting part, the second rotating assembly is hinged to the second mounting part, and the base frame is provided with an avoidance part at a position close to the second mounting part.

In an embodiment, the first rotating assembly and the second rotating assembly are parallel to a rotation centerline of the base frame assembly and are not coaxial.

In an embodiment, the second rotating assembly includes: a first rotating member and a second rotating member. The first rotating member and the second rotating member are respectively coupled to opposite two sides of the base frame assembly.

In an embodiment, the first rotating member or the second rotating member includes: a sliding part arranged on the supporting assembly, when the supporting assembly being switched from an unfolded state to a folded state, the sliding part sliding to an end close to the base frame assembly; a rotating part arranged on the base frame assembly, the rotating part being hinged to the base frame assembly; and a hinge part arranged between the sliding part and the rotating part, and coaxially hinged to the coupling rod assembly.

In an embodiment, the hinge structure further includes: a synchronization assembly coupled to the first rotating member and the second rotating member, and the synchronization assembly is configured to synchronously drive the first rotating member and the second rotating member to unfold or fold.

According to a second aspect of embodiments of the present disclosure, there is provided an electronic device, including: a display screen; and a hinge structure described in any of the first aspect. The display screen is arranged on the first supporting face and the second supporting face.

According to the technical solution provided in embodiments of the present disclosure, the supporting assembly is driven to rotate jointly through the coupling rod assembly, the first rotating assembly and the second rotating assembly, and a limiting effect on the supporting member during rotation is carried out by arranging the limiting member. Hence, the motion accuracy of the supporting assembly is higher, the screen folding is more natural, the screen is effectively protected, the supporting assembly provides effective support for the screen without floating phenomenon, and the screen is more flat.

It should be understood that the above general description and the detailed description following are only illustrative and explanatory and do not limit the present disclosure.

### BRIEF DESCRIPTION OF THE DRAWINGS

The drawings herein are incorporated into the specification and form part of the specification, show embodiments conforming to the present disclosure and are used together with the description to explain the principles of the present disclosure.
FIG. 1 is a structural schematic diagram of a hinge structure illustrated according to an exemplary embodiment.
FIG. 2 is an exploded schematic diagram of a single side structure of a hinge structure illustrated according to an exemplary embodiment.
FIG. 3 is a structural schematic diagram of a hinge structure at an unfolded angle illustrated according to an exemplary embodiment.
FIG. 4 is a structural schematic diagram of a hinge structure in a folding process illustrated according to an exemplary embodiment.
FIG. 5 is a structural schematic diagram of a hinge structure at a folded angle illustrated according to an exemplary embodiment.
FIG. 6 is a structural schematic diagram of an electronic device having a hinge structure illustrated according to an exemplary embodiment.

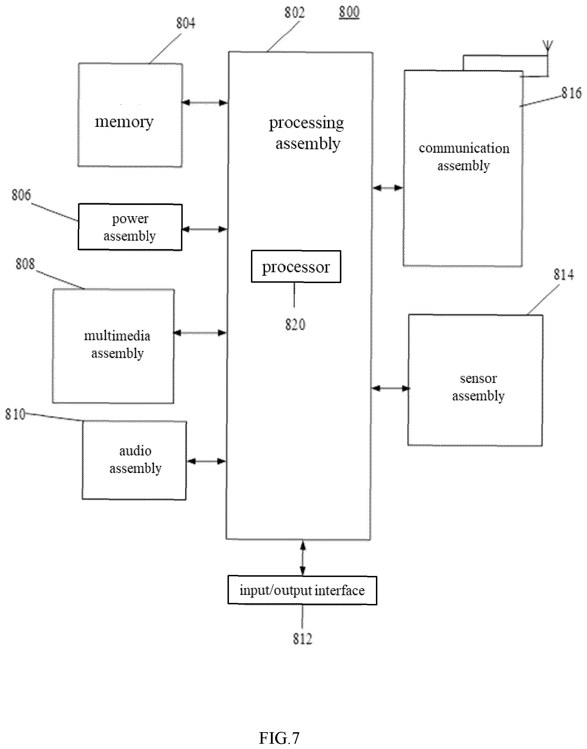

FIG. 7 is a block diagram of a device having a folding screen illustrated according to an exemplary embodiment.

### DETAILED DESCRIPTION OF THE DISCLOSURE

Exemplary embodiments are described in detail here, and examples are illustrated in the accompanying drawings. When the following description relates to drawings, the same number in different drawings represents the same or similar features, unless otherwise indicated. The implementations described in following exemplary embodiments do not represent all implementations consistent with the present disclosure.

In related art, an existing folding screen hinge structure is often complex to assemble, and a supporting member in the hinge structure are easy to float after folding, resulting in uneven screen and affecting the use experience of the display screen. Electronic products with folding screens often adopt a single-angle folding design, that is, the hinge structure may only drive one side of the screen to rotate, and is limited by the minimum folding radius of the folding screen, resulting in the folded screen may not be fully fitted, leaving a large wedge-shaped gap in the middle.

In order to solve the above-mentioned technical problem, a hinge structure is provided according to embodiments of the present disclosure.

The hinge structure provided by the present disclosure includes: a base frame assembly, including a first supporting face; a supporting assembly including a second supporting face, the first supporting face and the second supporting face being configured to bear a functional module or a functional assembly such as a display screen; a first rotating assembly rotatably coupled to the base frame assembly; a second rotating assembly, the second rotating assembly being slidably coupled to the supporting assembly; and a coupling rod assembly hinged to the supporting assembly, the first rotating assembly and the second rotating assembly.

The first supporting face and the second supporting face are configured to bear a functional module such as a display screen, Then, taking the first supporting face and the second supporting face bearing a display screen as an example, which may be divided into the following scenarios:

Scenario 1: The supporting assembly may be folded relative to the base frame assembly towards a side facing the display screen or unfolded towards a side facing away from the display screen, which may be understood as an inward folding method.

At this time, the supporting assembly includes a folded state and an unfolded state. When the supporting assembly is in the folded state, the first supporting face and the second supporting face enclose a screen-containing space, and the display screen is located in the screen-containing space. When the supporting assembly is in the unfolded state, the first supporting face and the second supporting face are in a same plane, and the first supporting face and the second supporting face are configured to jointly bear the display screen.

Scenario 2: The supporting assembly may be folded relative to the base frame assembly towards a side facing away from the display screen or unfolded towards a side facing the display screen, which may be understood as an outward folding method.

At this time, the supporting assembly includes a folded state and an unfolded state. When the supporting assembly is in the folded state, the display screen is arranged around an outside of the first supporting face and the second supporting face. When the supporting assembly is in the unfolded state, the first supporting face and the second supporting face are located in the same plane, and the first supporting face and the second supporting face are configured to jointly bear the display screen.

According to arrangement of the present disclosure, the coupling rod assembly, the supporting assembly is driven to rotate jointly through the coupling rod assembly, the first rotating assembly and the second rotating assembly, and a limiting effect on the supporting member during rotation is carried out by arranging the limiting member. Hence, the motion accuracy of the supporting assembly is higher, the screen folding is more natural, the screen is effectively protected, the supporting assembly provides effective support for the screen without floating phenomenon, and the screen is more flat.

It is understood that the hinge structure referred to in the present disclosure may be applied to any of the terminals listed below.

It is understood that the terminal referred to in the present disclosure may also be referred to as a terminal device, a user equipment (UE), a mobile station (MS), a mobile terminal (MT), etc., and is a device that provides voice and/or data connectivity to users. For example, the terminal may be a handheld device with wireless connectivity function, an in-vehicle device, and so on. At present, some examples of terminals are: mobile phones, pocket personal computers (PPCs), palm computers, personal digital assistants (PDAs), laptops, tablets, wearables, or in-vehicle devices. In addition, when it is a vehicle-to-everything (V2X) communication system, the terminal device may also be an on-board device. It should be understood that embodiments of the present disclosure do not limit the specific technology and specific device form used in the terminal.

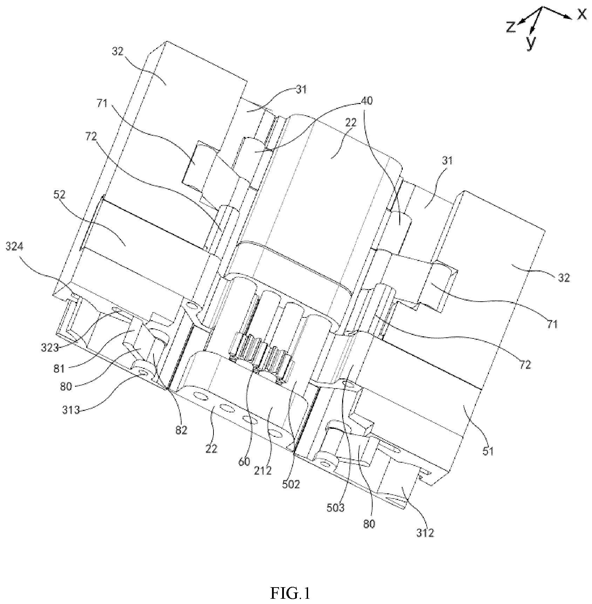

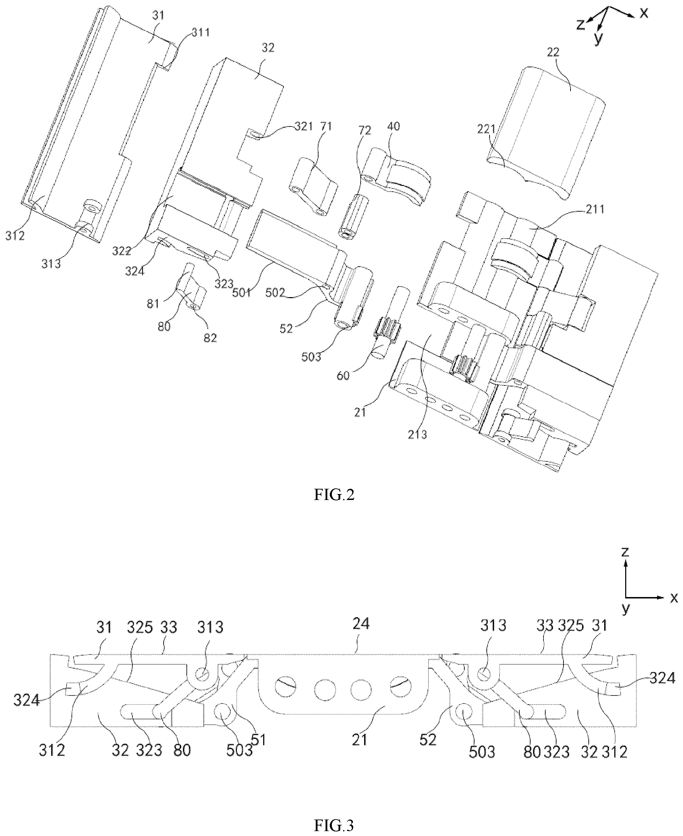

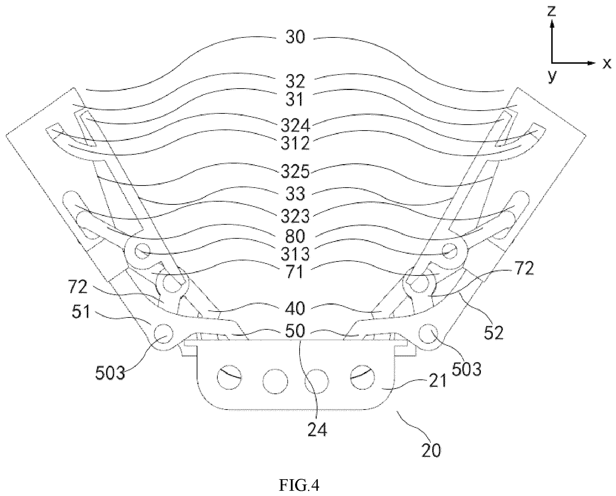

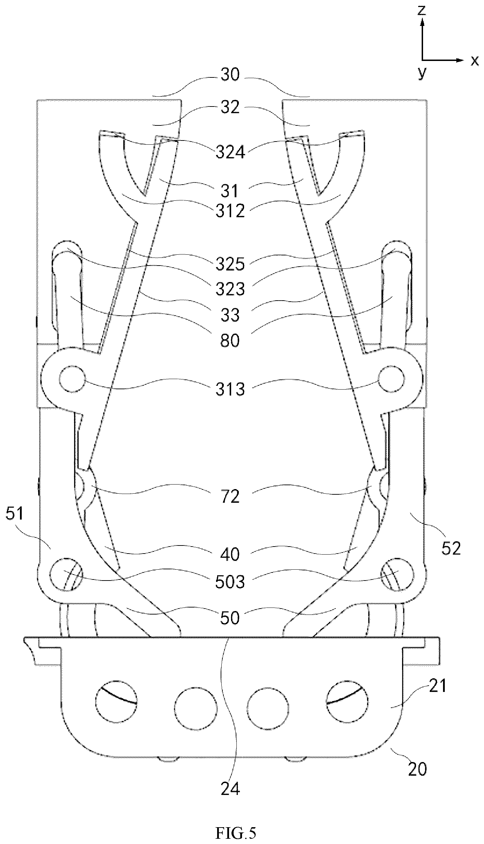

FIG. 1 is a structural schematic diagram of a hinge structure illustrated according to an exemplary embodiment. FIG. 2 is an exploded schematic diagram of a single side structure of a hinge structure illustrated according to an exemplary embodiment. FIG. 3 is a structural schematic diagram of a hinge structure at an unfolded angle illustrated according to an exemplary embodiment. FIG. 4 is a structural schematic diagram of a hinge structure in a folding process illustrated according to an exemplary embodiment. FIG. 5 is a structural schematic diagram of a hinge structure at a folded angle illustrated according to an exemplary embodiment.

In some embodiments, as illustrated in FIGS. 1 to 5, the hinge structure includes a base frame assembly 20, a supporting assembly 30, a first rotating assembly 40, a second rotating assembly 50 and a coupling rod assembly. The base frame assembly 20 may be rotatably coupled to the first rotating assembly 40, the base frame assembly 20 may also be rotatably coupled to the second rotating assembly 50, the supporting assembly 30 may be hinged to the first rotating assembly 40, and the supporting assembly 30 may be slidably coupled to the second rotating assembly 50. The supporting assembly 30 may also be hinged to the coupling rod assembly. The base frame assembly 20 may provide a rotating fulcrum, so that the first rotating assembly 40, the second rotating assembly 50 and the coupling rod assembly may rotate relative to the base frame assembly 20. The supporting assembly 30 may be rotatably coupled to the base frame assembly 20 through the first rotating assembly 40, the second rotating assembly 50 and the coupling rod assembly.

In some embodiments, the supporting assembly 30 may be rotatably coupled to the base frame assembly 20. The supporting assembles 30 may be arranged at two sides of the base frame assembly 20. The supporting assembly 30 may rotate around the base frame assembly 20. For example, in FIGS.3 to 4, the supporting assembly 30 may rotate around an axis parallel to the Y axis direction. It should be noted that the Y-axis direction may be a length direction or a width direction of the supporting assembly 30.

In some embodiments, the supporting assemblies 30 may rotate around the base frame assembly 20 toward or away from each other, so that the supporting assemblies 30 may be switched between a folded state and an unfolded state.

In some embodiments, the base frame assembly 20 may be extended on a plane formed in the X-axis direction and the Y-axis direction, for example, it may be a rectangular shape formed in the X-axis direction and the Y-axis direction. However, the present disclosure is not limited to this, and the base frame assembly 20 may also be other polygonal shapes, or circular or oval shapes.

In some embodiments, the supporting assembly 30 may be extended on a plane formed in the X-axis direction and the Y-axis direction, for example, it may be a rectangular shape formed in the X-axis direction and the Y-axis direction. However, the present disclosure is not limited to this, and the supporting assembly 30 may also be other polygonal shapes, circular or oval shapes.

In some embodiments, the base frame assembly 20 includes a first supporting face 24, and the supporting assembly 30 includes a second supporting face 33. For example, a pair of second supporting faces 33 arranged oppositely and spaced by the base frame assembly 20 may be included. For example, as illustrated in FIG. 3, the first supporting face 24 may be an upper surface in the Z-axis direction. The Z-axis direction may be a thickness direction of the hinge structure. When the hinge structure is used in an electronic device, the Z-axis direction may also be a thickness direction of the electronic device. When the hinge structure is used in the electronic device, the first supporting face 24 and the second supporting face 33 are configured to support a display screen of the electronic device.

It needs to be explained that when the supporting assembly 30 is in the folded state, the supporting assembly is in a first locking position, that is, the supporting assembly 30 is in a fully unfolded state relative to the base frame assembly 20, the first supporting face and the second supporting face are located in the same plane, and the first supporting face and the second supporting face are configured to jointly bear the screen in the unfolded state. When the supporting assembly 30 is in the folded state, the supporting assembly is in a second locking position, that is, the supporting assembly 30 is in a fully folded state relative to the base frame assembly 20. It is understandable that when the supporting assembly is folded relative to the base frame assembly in an inward folding method, the first supporting face is obliquely arranged relative to the second supporting face, the first supporting face and the second supporting face enclose a screen-containing space, the display screen is located in the screen-containing space, and the screen-containing space is configured to accommodate and protect the display screen. When the supporting assembly is folded relative to the base frame assembly in an outward folding method, the display screen is arranged around a side of the first supporting face and the second supporting facing away from a base frame.

In some embodiments, when the first supporting face 24 and the second supporting face 33 are in the same plane, the supporting assembly 30 is in the unfolded state.

In some embodiments, when the supporting assembly 30 is in the unfolded state, the supporting assembly 30 may be switched to the folded state by rotating around the base frame assembly 20 toward each other. When the supporting assembly 30 is in the folded state, the supporting assembly 30 may be switched to the unfolded state by rotating around the base frame assembly 20 away from each other.

In some embodiments, when the supporting assembly 30 is in the folded state, a screen-containing space may be defined between the first supporting face 24 and the second supporting face 33, and may be configured to accommodate other component and provide a supporting effect on the component.

In some embodiments, when the hinge structure is applied in the electronic device, the first supporting face 24 and the second supporting face 33 may enclose a screen-containing space, and a cross-sectional shape of the screen-containing space may be a teardrop-shaped or U-shaped. The teardrop-shaped screen-containing space is more in line with a bending performance of a flexible screen, has a protective effect on the flexible screen, and may prolong the service life of the flexible screen.

In some embodiments, the second supporting faces 33 located at two sides of the base frame assembly 20 may approach each other, so that the hinge structure is the folded state. When the second supporting faces 33 located at the two sides of the base frame assembly 20 are approached for a minimum distance, the hinge structure may be considered to be in a fully folded state, such as a state illustrated in FIG. 5. When a distance between the second supporting faces 33 located at the two sides of the base frame assembly 20 is greater than the minimum distance, the hinge structure may be considered to be in a folding process, and it may have a state illustrated in FIG.4.

In some embodiments, when the supporting assembly 30 is in the folded state, the first supporting face 24 and the second supporting face 33 may be obliquely arranged, and an inclination direction of the second supporting face 33 is identical to a folding direction of the supporting assembly 30.

In some embodiments, a first end of the first rotating assembly 40 may be rotatably coupled to the base frame assembly 20, and a second end of the first rotating assembly 40 may be hinged to the supporting assembly 30. The first end of the first rotating assembly 40 is an end of the first rotating assembly 40 close to the base frame assembly 20, and the second end of the first rotating assembly 40 is an end of the first rotating assembly 40 away from the base frame assembly 20.

In some embodiments, a first end of the second rotating assembly 50 may be rotatably coupled to the base frame assembly 20, and a second end of the second rotating assembly 50 may be slidably coupled to the supporting assembly 30. The first end of the second rotating assembly 50 is an end of the second rotating assembly 50 close to the base frame assembly 20, and the second end of the second rotating assembly 50 is an end of the second rotating assembly 50 away from the base frame assembly 20.

In some embodiments, the coupling rod assembly may be hinged to the supporting assembly 30, the first rotating assembly 40 and the second rotating assembly 50. For example, this is illustrated in FIG.1. The coupling rod assembly may rotate around a hinged shaft of the supporting assembly 30, the coupling rod assembly may be coaxially hinged to the first rotating assembly 40 along the Y-axis direction, and the coupling rod assembly may also be coaxially hinged to the second rotating assembly 50 also along the Y-axis direction.

In some embodiments, the coupling rod assembly may include a first coupling rod 71 and a second coupling rod 72. The first coupling rod 71 and the second coupling rod 72 may be located at a side of the supporting assembly 30 close to the base frame assembly 20. However, the present disclosure is not limited to this, and a plurality of coupling rods may also be provided for the coupling rod assembly. The present disclosure utilizes the plurality of coupling rods to make the supporting assembly 30 move more accurately in a process of rotation, makes an edge curvature of the screen-containing space enclosed by the first supporting face 24 and the second supporting face 33 different, and eases the transition at the folding place, so that the hinge structure may be applied to some components with flexibility. For example, it may be applied to a flexible screen, thereby reducing the crease of the flexible screen.

In some embodiments, the supporting assembly 30 may include a supporting member 31 and a fixed member 32. The supporting member 31 and the fixed member 32 may be located at two sides of the base frame assembly 20. The supporting member 31 may be hinged to the first rotating assembly 40 and the coupling rod assembly, so that the supporting 31 may rotate stably around the base frame assembly 20 under the drive of the first rotating assembly 40 and the coupling rod assembly. The fixed member 32 is slidingly coupled to the second rotating assembly 50, and the fixed member 32 is also hinged to the coupling rod assembly, so that the fixed member 32 may rotate stably around the base frame assembly 20 under the drive of the second rotating assembly 50 and the coupling rod assembly. The supporting member 31 is provided with the second supporting face 33, as illustrated in FIG.3, for example. The second supporting face 33 may be an upper surface in the Z-axis direction. The Z-axis direction may be the thickness direction of the hinge structure, and when the hinge structure is used in the electronic device, the Z-axis direction may also be the thickness direction of the electronic device.

In some embodiments, the supporting member 31 is configured to providing a supporting face for a functional module such as a display screen to bear the display module, etc., and the supporting member 31 is a plate-like structure, a block-shaped structure or a strip-shaped structure. However, the present disclosure is not limited to this, and it may also be other wedge-shaped, block-shaped or cylinder structures. The supporting member 31 is configured to provide a support structure for the hinge structure, and the fixed member 32 may provide support and fixing for the supporting member 31. Taking the inward folding method as an example, the rotational coupling relationship between the supporting member 31 and the fixed member 32 may make the supporting member 31 inclined to the Z-axis direction when the supporting assembly is in the folded state, so that the cross-sectional shape of the screen-containing space in a plane formed by the X-axis and Y-axis may present a shape with inclined edges, such as a teardrop shape or U shape.

The second end of the second rotating assembly 50 may slide in the fixed member 32, so that when the fixed member 32 of the supporting assembly 30 rotates, the second rotating assembly 50 remains coupled to the fixed member 32, and the rotation trajectory of the supporting assembly 30 may avoid being limited by a length of the second rotating assembly 50. Hence, the supporting assembly 30 may smoothly complete the rotation action.

It is understandable that in the process of folding or unfolding the supporting member 31 of the supporting assembly 30 relative to the base frame assembly 20, the second rotating assembly 50 may slide relative to the fixed member 32, and drive the supporting member 31 and the fixed member 32 to slide along a sliding direction. During the folding process of the supporting member 31 of the supporting assembly 30 relative to the base frame assembly 20, the supporting member 31 and the fixed member 32 slide towards a side facing the base frame assembly along the sliding direction. During the unfolding process of the supporting member 31 of the supporting assembly 30 relative to the base frame assembly 20, the supporting member 31 and the fixed member 32 slide toward a side facing away from the base frame assembly along the sliding direction. In the process of folding or unfolding the hinge structure, the supporting member 31 and the fixed member 32 slide along the sliding direction to better adapt to the display screen, so as to play the role of protecting the display screen, and prolong the service life of the display screen.

In some embodiments, a first end of the first coupling rod 71 is hinged to the supporting member 31, and a second end of the first coupling rod 71 is hinged to the fixed member 32. The first coupling rod 71 couples a side of the supporting member 31 close to the base frame assembly 20 to a side of the fixed member 32 close to the base frame assembly 20 through two hinged relationships, so that the supporting member 31 and the fixed member 32 have a certain space for movement, and may rotate relatively, For example, this is illustrated in FIG. 1. The first end of the first coupling rod 71 is an end of the first coupling rod 71 close to the base frame assembly 20 in the X-axis direction, and the second end of the first coupling rod 71 is an end of the first coupling rod 71 away from the base frame assembly 20 in the X-axis direction.

In some embodiments, a first end of the second coupling rod 72 is hinged to the first rotating assembly 40, and a second end of the second coupling rod 72 is hinged to the supporting member 31 and the first end of the first coupling rod 71. The second coupling rod 72 couples the first rotating assembly 40 to the supporting member 31 through two hinged relationships, so that the hinge structure is stronger in the Y-axis direction during the folding process. For example, this is illustrated in FIG.1. The first end of the second coupling rod 72 is an end of the second coupling rod 72, the first rotating assembly 40 away from the base frame assembly 20 in the X-axis direction, and the second end of the second coupling rod 72 is an end of the second coupling rod 72 close to the base frame assembly 20 in the X-axis direction.

Wherein, the first end of the first coupling rod 71 and the second end of the second coupling rod 72 are hinged side by side between the first rotating assembly 40 and the second rotating assembly 50, so that the supporting assembly 30 may be stressed uniformly and may rotate around the base frame assembly 20 more stably. In some embodiments, the first coupling rod 71 and the second coupling rod 72 are arranged side by side between the first rotating assembly 40 and the second rotating assembly 50 along the Y-axis direction, so that the rotation direction of the first coupling rod 71 and the second coupling rod 72 may be perpendicular to the Y-axis direction, and the supporting assemblies 30 may better enclose each other when in the folded state.

In some embodiments, the supporting assembly 30 includes a first hinge part 311. The first hinge part 311 has an opening not less than a sum of widths of the first end of the first rotating assembly 40, the first end of the first coupling rod 71 and the second end of the second coupling rod 72. For example, this is illustrated in FIG.1. If the opening is less than the sum of the widths of the first end of the first rotating assembly 40, the first end of the first coupling rod 71 and the second end of the second coupling rod 72, the first end of the first rotating assembly 40, the first end of the first coupling rod 71 and the second end of the second coupling rod 72 cannot be accommodated simultaneously, so that the supporting assembly 30, the first end of the first rotating assembly 40, the first end of the first coupling rod 71 and the second end of the second coupling rod 72 cannot be hinged on a same hinged shaft. The hinged shaft extends in the Y axis direction. The first hinge part 311 may make the coupling rod assembly and the first rotating assembly 40 hinged to the supporting assembly 30, so that the coupling rod assembly and the first rotating assembly may limit the rotation trajectory of the supporting assembly 30.

In some embodiments, the first end of the first rotating assembly 40, the first end of the first coupling rod 71, and the second end of the second coupling rod are arranged in the opening of the first hinge part 311, and are jointly hinged to the first hinge part 311 of the supporting assembly 30 on the same hinged shaft. The hinged shaft extends in the Y axis direction.

In some embodiments, the fixed member 32 includes a first sliding groove 322, and the second end of the second rotating assembly 50 may be slidably arranged in the first sliding groove 322 of the fixed member 32, for example, as illustrated in FIG. 1. The second end of the second rotating assembly 50 may slide relative to the first sliding groove 322, and the second end of the second rotating assembly 50 may be an end of the second rotating assembly 50 away from the base frame assembly 20 in the X-axis direction.

The second end of the second rotating assembly 50 may slide in the first sliding groove 322 of the fixed member 32, so that when the fixed member 32 of the supporting assembly 30 rotates, the second rotating assembly 50 remains coupled to the fixed member 32, and the rotation trajectory of the supporting assembly 30 may avoid being limited by the length of the second rotating assembly 50. Hence, the supporting assembly 30 may smoothly complete the rotation action.

As the supporting assembly 30 switches between the unfolded state or the folded state, the second rotating assembly 50 slides in the first sliding groove 322.

In some embodiments, when the supporting assembly 30 is in the unfolded state, the second end of the second rotating assembly 50 is adjacent to an end of the first sliding groove 322 away from the base frame assembly 20, and when the supporting assembly 30 is switched from the unfolded state to the folded state, the second end of the second rotating assembly 50 slides to an end of the first sliding groove 322 close to the base frame assembly 20.

In some embodiments, the fixed member 32 further includes a second hinge part 321, and the second hinge part 321 is hinged to the second end of the first coupling rod 71. For example, this is illustrated in FIG. 1. The second end of the first coupling rod 71 is an end of the first coupling rod 71 away from the base frame assembly 20 in the X-axis direction.

The supporting assembly 30 is driven to rotate jointly through the fitting and coupling between the coupling rod assembly, the first rotating assembly 40, and the second rotating assembly 50 and the fixed member 32, so that the motion accuracy of the supporting assembly 30 is higher, and the component accommodated between them may be protected.

When the hinge structure is used in the electronic device, folding of the screen arranged on the second supporting face 33 is more natural, and the screen is effectively protected.

In some embodiments, the supporting member 31 may be rotatably coupled to the fixed member 32. In the folding process of the supporting assembly 30, while the supporting member 31 and the fixed member 32 rotate around the base frame assembly 20, the relative rotation between the supporting member 31 and the fixed member 32 base frame may also occur.

In some embodiments, the fixed member 32 is provided with a first arc-shaped sliding groove 324, for example, as illustrated in FIG.2. The first arc-shaped sliding groove 324 may be arc-shaped in a plane formed by the X-axis direction and the Z-axis direction, and the first arc-shaped sliding groove 324 may be extended in the Y-axis direction. The supporting member 31 may be provided with a first sliding part 312 corresponding to the first arc-shaped sliding groove 324, the first sliding part 312 may be a circular arc-shaped protruding structure, and the first sliding part 312 may slide in the first arc-shaped sliding groove 324. However, the present disclosure is not limited to this, and the first arc-shaped sliding groove 324 may not be an arc-shaped structure, but any other shapes that may be implemented. When the first arc-shaped sliding groove 324 is an arc-shaped structure, the resistance of the first sliding part 312 sliding in the first arc-shaped sliding groove 324 may be reduced, and the supporting member 31 and the fixed member 32 may rotate smoothly.

In some embodiments, an end of the first arc-shaped sliding groove 324 is an opening, which, for example, may be called a sliding groove opening. For example, this is illustrated in FIG.3. The sliding groove opening may be arranged in the upper surface of the fixed member 32 in the Z-axis direction. The other end of the first arc-shaped sliding groove 324 is a bottom of the sliding groove, and the bottom of the sliding groove is an end point of an arc extension of the first arc-shaped sliding groove 324. The shape of the bottom of the sliding groove may be matched with the first sliding part 312. The bottom of the sliding groove may be arranged inside the fixed member 32.

In some embodiments, the first sliding part 312 is a circular arc-shaped protruding structure, for example, as illustrated in FIG.3. However, the present disclosure is not limited to this, and the first arc-shaped sliding groove 324 may also not be an arc-shaped structure, but is any other shape that may be implemented. When the first sliding part 312 is a circular arc-shaped protruding structure, the resistance of the first sliding part 312 sliding in the first arc-shaped sliding groove 324 may be reduced, and the supporting member 31 and the fixed member 32 may rotate smoothly. The cross-sectional shape of the first sliding part 312 on a plane formed by the Z-axis direction and the X-axis direction is matched with a shape of the first arc-shaped sliding groove 324.

When the supporting assembly 30 is in the unfolded state, at least a portion of the first sliding part 312 is located outside the opening of the first arc-shaped sliding groove 324. When the supporting assembly 30 switches from the unfolded state to the folded state, while the supporting member 31 and the fixed member 32 rotate in the folding direction, a relative rotation also occurs between the supporting part 31 and the fixed member 32, and the relative rotation causes the first sliding part 312 to slide to the bottom of the sliding groove. When the supporting assembly 30 is in the folded state, the first sliding part 312 is abutted against the bottom of the sliding groove, through the form-fitting of the first sliding part 312 and the first arc-shaped sliding groove 324, the rotation trajectory of the supporting member 31 may be limited, the supporting member 31 may be prevented from floating up in the folding or unfolding process and causing damage to the component accommodated in it. When the hinge structure is used in the electronic device, the supporting member 31 may be prevented from jacking up the screen and affecting the user experience.

In some embodiments, the fixed member 32 includes an abutment inclined face 325, the abutment inclined face 325 is located at a face of the fixed member 32 facing the supporting member 31, and the sliding groove opening of the first arc-shaped sliding groove 324 is facing a side of the abutment inclined face, to facilitate cooperation of the first arc-shaped sliding groove 324 and the first sliding part 312 in motion.

When the supporting assembly 30 is in the unfolded state, the abutment inclined face 325 is obliquely arranged with the first supporting face 24 and the second supporting face 33, and the supporting member 31 and the supporting beveling face 325 may be separated from each other. When the supporting assembly 30 is in the folded state, the supporting member 31 may be abutted against the abutment inclined face 325. In the process of rotation, a rotation angle of the supporting member 31 is limited from the face of the supporting member 31 facing away from the second supporting face 33 of the supporting member 31, so that the rotation angle of the supporting member 31 is more accurate.

In some embodiments, the hinge structure may also include a limiting member 80. The limiting member 80 may be configured to have a limiting effect on the supporting member 31, and specifically the supporting member 31 may be prevented from floating up in the unfolded state, so that the stable supporting face of the hinge structure may be provided.

In some embodiments, the supporting member 31 may include a first mounting part 313, the first mounting part 313 may be arranged at a face of the supporting member 31 facing away from the second supporting face 33, and may be arranged on a side of the supporting member 31 close to the base frame assembly 20, and the first mounting part 313 may be provided with one or two hinged holes, and may also be provided with more hinged holes.

In some embodiments, an end of the limiting member 80 is provided with a third hinge part 82, and through the hinge of the third hinge part 82 and the first mounting part 313, the limiting member 80 complete hinged to the supporting member 31.

Through the hinged relationship between the third hinge part 82 and the first mounting part 313, the limiting member 80 may be coupled to the supporting assembly 30 at a fixed point and may rotate around the first mounting part 313 at the same time, so that the limiting member 80 leaves the space for the supporting assembly 30 to rotate normally while limiting the motion trajectory of the supporting assembly 30.

In some embodiments, the other end of the limiting member 80 is provided with a fixed part 81, and a surface of the fixed member 32 perpendicular to the folding direction is provided with a second sliding groove 323.

In some embodiments, the fixed part 81 may be a protruding structure perpendicular to a length direction of a limiting member 80.

In some embodiments, the fixed part 81 of the limiting member 80 may be slidably arranged in the second sliding groove 323, and the fixed part 81 of the limiting member 80 may slide relative to the second sliding groove 323.

In some embodiments, an extension direction of the second sliding groove 323 may be parallel to a sliding direction of the second rotating assembly 50 in the supporting assembly 30, for example, as illustrated in FIG.1. That is, the extension direction of the second sliding groove 323 may be parallel to the X-axis direction, so that when the fixed part 81 of the limiting member 80 slides in the second sliding groove 323, an angle of a pulling force received by the limiting member 80 is similar to the extension direction of the second sliding groove 323, and the supporting assembly 30 is more smooth in the rotation process.

When the supporting assembly 30 switches from the folded state to the unfolded state, the supporting member 31 may pull the fixed part 81 to slide toward the first end of the second sliding groove 323 close to a side of the base frame assembly 20. When the supporting assembly 30 is in the unfolded state, the fixed part 81 is abutted against the first end of the second sliding groove 323 close to a side of the base frame assembly 20. At this moment, the limiting member 80 is fixed in the direction of the first end of the second sliding groove 323, so that the limiting member 80 may limit the movement of the supporting member 31, and prevent the supporting member 31 from floating up in the unfolded state and causing damage to the component accommodated in it, and from jacking up the screen and affecting the user experience when the hinge structure is used in the electronic device.

Through the limiting effect of the first sliding part 312 on the supporting member 31 and the limiting effect of the limiting member 80 on the supporting member 31, when the supporting assembly 30 is in the unfolded state, no part of the supporting assembly 30 floats up, so as to avoid affecting the flatness of the flexible screen after unfolding, and improve the use experience of the display screen.

In some embodiments, the base frame assembly 20 further includes a base frame 21 and a cover plate 22. The cover plate is arranged at a face of the base frame assembly 20 facing away from the first supporting face 24, and the cover plate 22 may have a fixing effect on the component arranged on the base frame assembly 20. The cover plate 22 may also have an effect of protecting the base frame assembly 20 and prevent foreign matter from entering an interior of the base frame assembly 20 and causing damage to the component in the base frame assembly 20.

The first supporting face 24 is arranged at a first face of the base frame 21, and the base frame 21 further includes a second face facing away from the first supporting face 24.

The second face of the base frame 21 is provided with a second mounting part 212, the first end of the second rotating assembly 50 is arranged on the second face of the base frame 21, the second rotating assembly 50 is hinged to the second mounting part 212 of the base frame 21, and the second mounting part 212 provides a rotating fulcrum for the second rotating assembly 50.

In some embodiments, the second mounting part 212 may be one or more protruding structures arranged on the second face of the base frame 21, the protruding structure may be provided with a plurality of through holes, the first end of the second rotating assembly 50 is a cylinder structure, and the cylinder structure of the first end of the second rotating assembly 50 may be fitted in the through hole of the second mounting part 212 to form a hinge.

In an embodiment, as illustrated in FIG. 1, the second mounting part 212 is configured to fix the second rotating member 51, and the second mounting part 212 includes: a body and a through hole arranged in the body. The through hole may be a circular or square shape through hole, the first end of the second rotating assembly 50 is a cylinder structure, and a length direction of the cylinder structure of the second rotating assembly 50 is perpendicular to the length direction of the second rotating assembly 50. That is, the length direction of the cylinder structure of the second rotating assembly 50 is parallel to the Y axis direction.

In some embodiments, an opening direction of the through hole of the second mounting part 212 is parallel to the first supporting face 24 and is also parallel to the length direction of the base frame 21, i.e., parallel to the Y-axis direction.

In some embodiments, the base frame 21 is provided with an avoidance part 213 at a position close to the second mounting part 212, the avoidance part 213 may be a notch structure, and the avoidance part 213 may make the rotation of the second rotating assembly 50 not hindered by the base frame 21.

In some embodiments, the cover plate 22 is mounted on the second face of the base frame 21. The second face of the base frame 21 is a face facing away from the first supporting face 24.

In some embodiments, one of the cover plate 22 and the base frame 21 is provided with an arc-shaped protrusion 211, the other of the cover plate 22 and the base frame 21 is provided with an arc-shaped groove 221, and the arc-shaped protrusion 211 and the arc-shaped groove 221 are matched in curvature, so that the arc-shaped protrusion 211 and the arc-shaped groove 221 enclose a second arc-shaped sliding groove. The second arc-shaped sliding groove is arranged in the second face of the base frame 21.

In some embodiments, the second end of the first rotating assembly 40 is provided with an arc-shaped structure matched with the second arc-shaped sliding groove, the second end of the first rotating assembly 40 is arranged in the second arc-shaped sliding groove, the first rotating assembly 40 is rotatably arranged on the base frame assembly 20, the first rotating assembly 40 remains coupled to the supporting assembly 30, and the rotation trajectory of the supporting assembly 30 may be avoid being limited by the length of the first rotating assembly 40. Hence, the supporting assembly 30 may smoothly complete the action

In some embodiments, when the supporting assembly 30 is in the unfolded state, the second end of the first rotating assembly 40 is abutted against the base frame 21, which may restrain the excessive rotation of the supporting assembly 30 in the unfolded state, avoid stretching the flexible display screen, and have a protective effect on the flexible display screen.

In some embodiments, a rotation centerline of the first rotating assembly 40 is parallel to a rotation centerline of the second rotating assembly 50.

In some embodiments, as illustrated in FIG.1, the rotation centerline of the first rotating assembly 40 and the rotation centerline of the second rotating assembly 50 are parallel to the rotation centerline of the base frame assembly 20 and are not coaxial, that is, parallel to the Y-axis direction, so that the rotation of the supporting assembly 30 may be perpendicular to the Y-axis direction, and the folded state and the unfolded state of the supporting assembly 30 are flush in appearance.

In some embodiments, the second rotating assembly 50 includes a first rotating member 51 and a second rotating member 52, and the first rotating member 51 and the second rotating member 52 may be respectively coupled to opposite two sides of the base frame assembly 20.

In some embodiments, the first rotating member 51 or the second rotating member 52 includes a sliding part 501, a rotating part 502 and a hinge part 503.

In some embodiments, the sliding part 501 is arranged in the first sliding groove 322 of the fixed member 32 of the supporting assembly 30, and the sliding part 501 may slide in the first sliding groove 322. The sliding part 501 is provided with a protruding structure, and the first sliding groove 322 is provided with a groove structure corresponding to the protruding structure of the sliding part 501, so that the sliding part 501 slides stably and does not fall off in the first sliding groove 322.

In some embodiments, when the supporting assembly 30 switches from the unfolded state to the folded state, the sliding part 501 slides toward an end of the first sliding groove 322 close to a side of the base frame assembly 20.

In some embodiments, the rotating part 502 is arranged at the second mounting part 212 of the base frame 21 of the base frame assembly 20.

In some embodiments, the rotating part 502 may be a cylinder structure, and the rotating part 502 may rotate in the through hole of the second mounting part 212, so that the first rotating member 51 or the second rotating member 52 forms a hinged relationship with the base frame 21.

In some embodiments, the hinge part 503 is arranged between the sliding part 501 and the rotating part 502, and the hinge part 503 may include a hinge hole so that the hinge part 503 may be coaxially hinged to the coupling rod assembly.

In some embodiments, the supporting member 31, the first rotating assembly 40, the first coupling rod 71 and the second coupling rod 72 are coaxially hinged. This makes the supporting member 31, the first rotating assembly 40, the first coupling rod 71 and the second coupling rod 72 may rotate around a same rotating axis, and the motion accuracy of the supporting plate is improved.

In some embodiments, the hinge structure further includes a synchronization assembly 60, and the synchronization assembly 60 is configured to synchronously drive the second rotating assembly 50 coupled to the two sides of the base frame assembly 20 to unfold or fold.

In some embodiments, the synchronization assembly 60 may be a rod-shaped structure fitted with the through hole of the second mounting part 212, so that the synchronization assembly 60 may rotate in the through hole of the second mounting part 212.

In some embodiments, the synchronization assembly 60 and the first end of the second rotating assembly 50 (i.e., an end close to the base frame assembly) are provided with gear tooth structures meshed with each other, and the number of gear teeth and the diameter of a gear are identical. The number of gears is an even number, so that when one of the first rotating member 51 or the second rotating member 52 of the second rotating assembly 50 rotates, the rotation may be synchronized to the other of the first rotating member 51 or the second rotating member 52 of the second rotating assembly 50 through the synchronization assembly 60. Furthermore, the second rotating assembly 50 may drive the supporting assembly 30 to carry out synchronous unfolding action or folding action.

In some embodiments, the second rotating assembly 50 includes a first rotating member 51 and a second rotating member 52, and the first rotating member 51 and the second rotating member 52 may be respectively coupled to opposite two sides of the base frame assembly 20. In this case, the gear tooth structures meshed with each other may be arranged between the synchronization assembly 60 and the first end of the first rotating member 51 and the first end of the second rotating member 52, and the number of gear teeth and the diameter of the gear are identical. The number of gears is an even number, so that when one of the first rotating member 51 or the second rotating member 52 rotates, the rotation may be synchronized to the other of the first rotating member 51 or the second rotating member 52 of the second rotating assembly 50 through the synchronization assembly 60. Furthermore, the second rotating assembly 50 may drive the supporting assembly 30 to carry out synchronous unfolding action or folding action.

In some embodiments, when the supporting assembly 30 switches from the unfolded state to the folded state, the supporting assembly 30 moves in the folding direction, the first rotating assembly 40, the second rotating assembly 50 and the coupling rod assembly also move to the folding angle, the sliding part 501 of the second rotating assembly 50 moves to an end of the first sliding groove 322 close to the base frame assembly 20, and the limiting member 80 slides to the first end of the second sliding groove 323 close to a side of the base frame assembly 20. At the same time, the first sliding part 312 moves from the unfolding angle to the folding angle with the supporting assembly 30 and slides to the bottom of the sliding groove of the first arc-shaped sliding groove 324. It should be noted that those skilled in the art may understand that the various embodiments involved in the present disclosure may be used in conjunction with the preceding embodiments or independently. Whether used alone or in conjunction with the preceding embodiments, the implementation principle is similar. In embodiments of the present disclosure, some embodiments are illustrated in an implementation way that is used together. Of course, those skilled in the art may understand that such examples are not limitations of embodiments of the present disclosure.

Based on the same conception, the embodiments of the present disclosure also provide an electronic device.

The electronic device may be a laptop, a desktop computer, a mobile phone, a digital broadcast terminal, a messaging device, a game console, a tablet device, a medical equipment, a fitness equipment, a personal digital assistant, a translator, a watch, a bracelet and other wearable devices, etc., and may be any kind of electronic devices with a flexible screen. In the following explanations, we will use the mobile phone as an example, but the present disclosure is not limited to this.

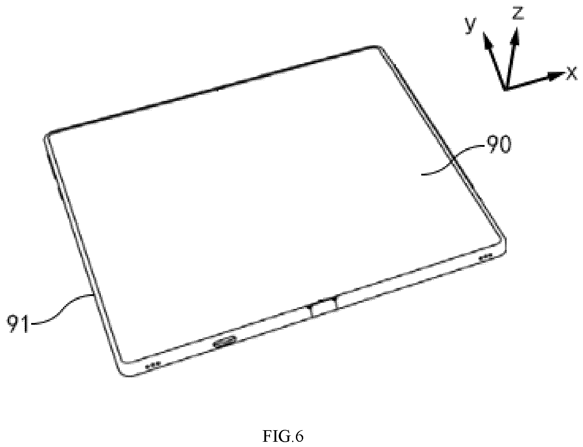

FIG. 6 is a structural schematic diagram of an electronic device having a hinge structure illustrated according to an exemplary embodiment.

In some embodiments, as illustrated in FIG.6, the electronic device includes a display screen 90 and a hinge structure. The display screen 90 may be a flexible screen, for example, it may be an OLED (Organic Light-Emitting Diode, organic light-emitting semiconductor). The display screen 90 may be arranged on the first supporting face 24 of the base frame assembly 20 and the second supporting face 33 of the supporting assembly 30. The second supporting face 33 may be arranged opposite to a back face of the display screen 90. The display screen 90 may have a display face configured to display an image, and the user may directly observe the display face outside the electronic device. The back face of the display screen 90 may be arranged opposite to the display face, and provided with a plurality of electronic elements, circuits and the like.

The supporting assembly 30 may drive a portion of the display screen 90 arranged on the second supporting face 33 to carry out a rotation motion, so that the flexible screen as a whole produces a folding effect.

In some embodiments, a folding method of the display screen 90 is the inward folding method, the display screen 90 may approach oppositely, and when the hinge is in the folded state, the display screen 90 may be located in the accommodating space enclosed by the base frame assembly 20 and the supporting assembly 30.

In some embodiments, the electronic device may also include a battery cover 91, the battery cover 91 may be arranged at a face of the hinge structure facing away from the first supporting face 24 and the second supporting face 33, and the battery cover 91 plays the role of protecting an internal element of the electronic device. The battery cover 91 may be made of materials such as metal, plastic or rubber. When the battery cover 91 is made of metal, the battery cover 91 may make the electronic device dissipate heat well, and enhance the touch texture of the electronic device. When the battery cover 91 is made of plastic or rubber, it may reduce the weight of the electronic device.

In some embodiments, the folding method of the display screen 90 is the outward folding method. In the case of outward folding, the battery cover 91 may be approach oppositely.

In some embodiments, a face of the fixed member 32 facing away from the abutment inclined face 325 is provided with a second screen configured for display function after the flexible screen is folded. When the hinge structure is at a folding angle, faces of the fixed members 32 facing away from the abutment inclined faces 325 should be parallel to each other and perpendicular to the first supporting face 24, so that the appearance face the mobile phone in the folded state remains flush and beautiful.

In some embodiments, when the supporting assembly 30 is at an unfolding angle, the flexible screen is in the unfolded state, and the flexible screen may operate normally. When the supporting assembly 30 is at a folding angle, the flexible screen is in the folded state, and the flexible screen may be turned off and enters a standby state.

In some embodiments, when the supporting assembly 30 is at a folding angle, the cross-sectional shape of the flexible screen is teardrop-shaped. On the one hand, the teardrop-shaped folding interface shape is more in line with the natural folding state of the flexible screen at the folding corner, may reduce the crease of the flexible screen, and effectively protect the flexible screen; on the other hand, a gap of the remaining portions of a machine body is greatly reduced, and the two portions of the machine body may be fitted, so that the thickness of the machine body in the folded state is reduced, the current development trend of lightness and thinness of the electronic device is conformed, and the user experience is improved.

FIG. 6 is a block diagram of an apparatus having a folding screen illustrated according to an exemplary embodiment. For example, the apparatus 800 may be a mobile phone, a computer, a digital broadcast terminal, a messaging device, a game console, a tablet device, a medical device, a fitness device, a personal digital assistant, etc.

With reference to FIG.6, the apparatus 800 may include one or more of the following assemblies: a processing assembly 802, a memory 804, a power assembly 806, a multimedia assembly 808, an audio assembly 810, an input/output (I/O) interface 812, a sensor assembly 814, and a communication assembly 816.

The processing assembly 802 typically controls the overall operation of the apparatus 800, such as those associated with display, telephone calls, data communications, camera operations, and recording operations. The processing assembly 802 may include one or more processors 820 to execute instructions to complete all or part of the steps of the method described above. In addition, the processing assembly 802 may include one or more modules to facilitate interaction between the processing assembly 802 and other assemblies. For example, the processing assembly 802 may include a multimedia module to facilitate interaction between the multimedia assembly 808 and the processing assembly 802.

The memory 804 is configured to store various types of data to support operations on the apparatus 800. Examples of the data include instructions for any application or method operated on the apparatus 800, contact data, phonebook data, messages, pictures, videos, etc. the memory 804 may be implemented by any type of volatile or non-volatile memory device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disc.

The power assembly 806 provides power to the various assemblies of the apparatus 800. The power assembly 806 may include a power management system, one or more power sources, and other assemblies associated with generating, managing, and distributing power for the apparatus 800.

The multimedia assembly 808 includes a screen providing an output interface between the apparatus 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor may not only sense the boundary of the touch or sliding action, but also detect the duration and pressure associated with the touch or sliding action. In some embodiments, the multimedia assembly 808 includes a front camera and/or a rear camera. When the apparatus 800 is in operating mode, such as shooting mode or video mode, the front camera and/or rear camera may receive external multimedia data. Each front and rear camera may be a fixed optical lens system or have focal length and optical zoom capabilities.

The audio assembly 810 is configured to output and/or input audio signals. For example, the audio assembly 810 includes a microphone (MIC) that is configured to receive an external audio signal when the apparatus 800 is in an operating mode, such as call mode, record mode, and speech recognition mode. The received audio signal may be further stored in memory 804 or sent through the communication assembly 816. In some embodiments, the audio assembly 810 further includes a speaker configured to output an audio signal.

The I/O interface 812 provides an interface between the processing assembly 802 and a peripheral interface module, which may be a keyboard, a clicking wheel, a button, and the like. These buttons may include, but are not limited to: the home button, volume button, start button, and lock button.

The sensor assembly 814 includes one or more sensors that are configured to provide a condition assessment of various aspects of the apparatus 800. For example, the sensor assembly 814 may detect the on/off state of the apparatus 800 and the relative positioning of the assemblies, for example, the assembles are a display and a keypad of the apparatus 800. The sensor assembly 814 may also detect a change in the position of an assembly of the apparatus 800 or the apparatus 800, the presence or absence of contact between the user and the apparatus 800, the direction or acceleration/deceleration of the apparatus 800, and temperature changes of the apparatus 800. The sensor assembly 814 may include a proximity sensor configured to detect the presence of nearby objects without any physical contact. The sensor assembly 814 may also include a light sensor, such as a CMOS or CCD image sensor, for use in imaging applications. In some embodiments, the sensor assembly 814 may also include an accelerometer, a gyroscope sensor, a magnetic sensor, a pressure sensor, or a temperature sensor.

The communication assembly 816 is configured to facilitate wired or wireless communication between the apparatus 800 and other devices. The apparatus 800 may be coupled to a wireless network based on communication standards, such as WiFi, 2G or 3G, or a combination thereof. In an exemplary embodiment, a communication assembly 816 receives a broadcast signal or broadcast-related information from an external broadcast management system over a broadcast channel. In an exemplary embodiment, the communication assembly 816 further includes a near-field communication (NFC) module to facilitate short-range communication. For example, the NFC module may be implemented based on Radio Frequency Identification (RFID) technology, Infrared Data Association (IrDA) technology, Ultra-Wideband (UWB) technology, Bluetooth (BT) technology and other technologies.

In the exemplary embodiment, the apparatus 800 may be used by one or more applicationspecific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic element implementations to perform the above methods.

In the exemplary embodiment, there is also provided a non-temporary computer-readable storage medium including instructions, such as a memory 804 including instructions, which may be executed by the processor 820 of the apparatus 800 to accomplish the method. For example, the non-temporary computer-readable storage medium may be ROM, random access memory (RAM), CD-ROM, tape, floppy disk, optical data storage device, etc.

It is further understood that in this present disclosure, "a plurality of" refers to two or more, and other quantifiers are similar. "And/or" describes the relationship between the associated object, indicating that there may be three relationships. For example, A and/or B, which may be dedicated: A alone, A and B at the same time, and B alone. The character "/" generally indicates that the relationship between the preceding and posting objects is an "or". The singular forms "a", "the" and "this" are also intended to include the plural forms, unless the context clearly indicates other meanings.

It is further understood that the terms "first", "second", etc., are used to describe various information, but this information should not be limited to these terms. These terms are used only to distinguish the same type of information from each other and do not indicate a specific order or importance. In fact, expressions such as "first" and "second" are used interchangeably. For example, the first information may also be referred to as the second information without departing from the scope of the present disclosure, and similarly, the second information may also be referred to as the first information.

It is further understood that, although the operations are described in a particular order in the drawings, they should not be construed as requiring the operations to be performed in the specific order illustrated or in the serial order, or to require all the operations illustrated to be performed in order to obtain the desired result. In a given environment, multitasking and parallel processing may be advantageous.

A person skilled in the art will be apt to think of other embodiments of the present disclosure after considering the description and practice of the invention disclosed herein. The application is intended to cover any variants, uses, or adaptations of the present disclosure, which follow the general principles of the present disclosure and include common knowledge or customary technical means in the art not disclosed in the present disclosure.

It should be understood that the present disclosure is not limited to the precise structure already described above and illustrated in the drawings, and may be modified and altered in various ways without departing from its scope. The scope of this present disclosure is limited only by the scope of the rights attached.

## Claims

1. A hinge structure, comprising:
a base frame assembly comprising a first supporting face;
a supporting assembly comprising a second supporting face;
a first rotating assembly rotatably coupled to the base frame assembly;
a second rotating assembly rotatably coupled to the base frame assembly, the second rotating assembly being slidably coupled to the supporting assembly; and
a coupling rod assembly hinged to the supporting assembly, the first rotating assembly and the second rotating assembly.

2. The hinge structure according to claim **1,** wherein the coupling rod assembly comprises:
a first coupling rod having an end hinged to the supporting assembly; and
a second coupling rod having an end hinged to the second rotating assembly,
wherein the other end of the first coupling rod is hinged to the first rotating assembly and the other end of the second coupling rod, and the other end of the second coupling rod is hinged to the other end of the first coupling rod and the supporting assembly.

3. The hinge structure according to claim 2, wherein
the other end of the first coupling rod is coaxially hinged to the first rotating assembly and the other end of the second coupling rod, and the first coupling rod and the second coupling rod are arranged side by side between the first rotating assembly and the second rotating assembly.

4. The hinge structure according to any one of claims 1 to 3, wherein the supporting assembly comprises:
a supporting member hinged to the first rotating assembly, the supporting member being also hinged to the coupling rod assembly; and
a fixed member slidably coupled to the second rotating assembly, the fixed member being also hinged to the coupling rod assembly,
wherein the supporting member is rotatably coupled to the fixed member.

5. The hinge structure according to claim 4, wherein the supporting member comprises:
a first hinge part hinged to the coupling rod assembly and the first rotating assembly.

6. The hinge structure according to claim 4, wherein the fixed member comprises:
a second hinge part hinged to the coupling rod assembly; and
a first sliding groove slidably coupled to the second rotating assembly.

7. The hinge structure according to claim 4, further comprising:
a limiting member hinged to the supporting member, the limiting member being also slidably coupled to the fixed member.

8. The hinge structure according to claim 7, wherein
the fixed member is provided with a second sliding groove;
the limiting member is provided with a fixed part slidably coupled to the second sliding groove,
wherein when the supporting assembly is in a folded state, the fixed part is abutted against a first end of the second sliding groove close to a side of the base frame assembly.

9. The hinge structure according to claim 8, wherein,
an extension direction of the second sliding groove is parallel to a sliding direction of the second rotating assembly and the supporting assembly.

10. The hinge structure according to claim 7, wherein,
the limiting member comprises a third hinge part;
a side of the supporting assembly facing away from the second supporting face is provided with a first mounting part, and the third hinge part of the limiting member is hinged to the first mounting part of the supporting assembly.

11. The hinge structure according to any one of claims 4 to 10, wherein
the fixed member is provided with a first arc-shaped sliding groove;
the supporting member is provided with a first sliding part, and the first sliding part is arranged in the first arc-shaped sliding groove;
wherein when the supporting assembly is in a folded state, the first sliding part is abutted against a bottom of the first arc-shaped sliding groove.

12. The hinge structure according to claim 11, wherein
the fixed member comprises an abutment inclined face, and an opening of the first arc-shaped sliding groove is toward a side of the abutment inclined face; and
when the supporting assembly is in the folded state, the supporting member is abutted against the abutment inclined face, the second supporting face is obliquely arranged with the first supporting face, and an inclination direction of the second supporting face is identical to a folding direction of the supporting assembly.

13. The hinge structure according to any one of claims 1 to 12, wherein the base frame assembly comprises:
a base frame, the first supporting face being located on the base frame, the second rotating assembly being hinged to a side of the base frame facing away from the first supporting face; and
a cover plate, one of the cover plate and the base frame being provided with an arc-shaped protrusion, the other of the cover plate and the base frame being provided with an arc-shaped groove, the arc-shaped protrusion and the arc-shaped groove enclosing a second arc-shaped sliding groove, the second arc-shaped sliding groove being located at a side facing away from the first supporting face, the first rotating assembly being rotatably arranged in the second arc-shaped sliding groove.

14. The hinge structure according to claim 13, wherein,
a side of the base frame facing away from the first supporting face is provided with a second mounting part, the second rotating assembly is hinged to the second mounting part, and the base frame is provided with an avoidance part at a position close to the second mounting part.

15. The hinge structure according to any one of claims 1 to 14, wherein,
the first rotating assembly and the second rotating assembly are parallel to a rotation centerline of the base frame assembly and are not coaxial.

16. The hinge structure according to claim 1, wherein the second rotating assembly comprises:
a first rotating member; and
a second rotating member, the first rotating member and the second rotating member are respectively coupled to opposite two sides of the base frame assembly.

17. The hinge structure according to claim 16, wherein the first rotating member or the second rotating member comprises:
a sliding part arranged on the supporting assembly, when the supporting assembly is switched from an unfolded state to a folded state, the sliding part sliding to an end close to the base frame assembly;
a rotating part arranged on the base frame assembly, the rotating part being hinged to the base frame assembly; and
a hinge part arranged between the sliding part and the rotating part, and coaxially hinged to the coupling rod assembly.

18. The hinge structure according to claim 16, further comprising:
a synchronization assembly coupled to the first rotating member and the second rotating member, the synchronization assembly being configured to synchronously drive the first rotating member and the second rotating member to unfold or fold.

19. An electronic device, comprising:
a display screen; and
a hinge structure according to any one of claims 1 to 18,
wherein the display screen is arranged on the first supporting face and the second supporting face.
